# EUROPEAN PATENT APPLICATION

(11) **EP 0 713 981 A1**
(43) Date of publication of application: **29.05.1996**
(21) Application number: 95308361.5
(22) Date of filing: 22.11.1995
(51) Int. Cl.: F16B 13/08

(54) **Anchoring device**

(30) Priority: 25.11.1994 GB 9423825
(71) Applicant: CCL SYSTEMS LIMITED, Leeds, West Yorkshire LS11 8BH (GB)
(72) Inventor: HOWARTH, BRIAN FRANK, PUDSEY. WEST YORKSHIRE LS28 8LB (GB)
(74) Representative: Chugg, David John

(57) **Abstract**

The invention concerns anchoring devices for blind fixing to a mounting surface. In particular, the anchoring device of the present invention comprises a toggle plate 22 having a first aperture 42 which is threaded for the acceptance of an external fitting such as a bolt and a second aperture 43 for connection to a guide means 21. In addition, the device comprises a clip 23. At a region where the guide means connects to the toggle plate 22, there is provided a connection portion which is arranged to be resiliently deformable so as to allow the main extent of the guide means 21 to be put in parallel relation with the toggle plate to permit the toggle plate to be pushed through an aperture of a mounting surface. Once the full extent of the toggle plate has passed through the aperture in the mounting surface, the toggle plates 22 springs back into an open configuration substantially at 90° to the main extent of the guide means 21. Clip 23 may then be pushed along runners of the guide means 21 and used to line the hole in the mounting surface. Once the clip is in place, the bolt may be passed through the clip and into connection with the first aperture 42. The runners of the guide means 21 may be trimmed to an appropriate length once the bolt is in place and the bolt may be used to affix any given external fixture to the mounting surface.

## Description

The invention relates to an anchoring device. In particular, the invention relates to an anchoring device which is particularly suitable for use with walls or other surfaces which permit access from one side only.

In many domestic and industrial situations, there is a need to fix a member such as a bolt, screw or the like to a supporting surface such as a wall in order to be able to hang an object, such as a picture etc therefrom. With solid walls, the standard technique is to drill a hole and insert a plug which expands to fill the hole as a screw or the like is inserted into the plug. However, such devices are unsuitable for use with very thin walls having a cavity directly behind them.

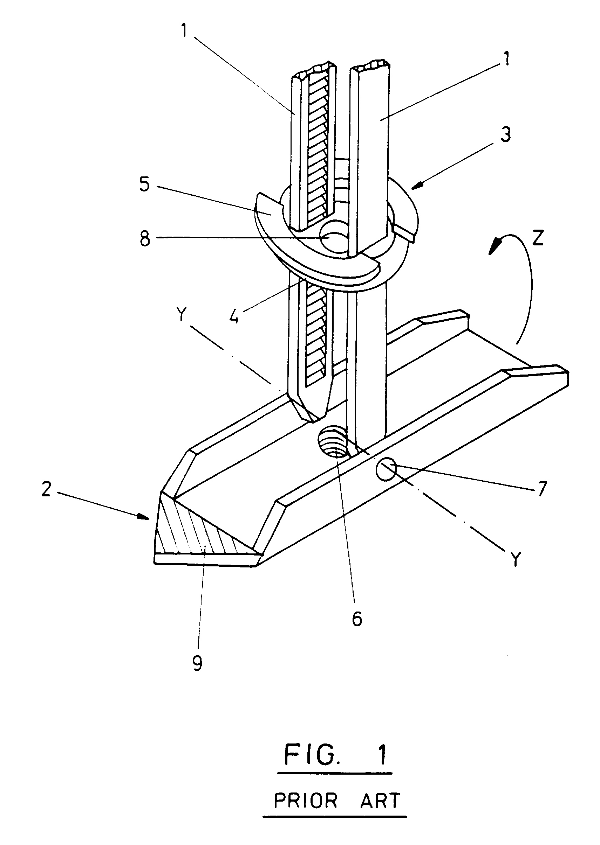

GB 1,585,973 discloses a device for enabling the attachment of a bolt or the like to such a thin wall. The device in that Patent comprises a pair of parallel runners pivotally attached to a toggle plate. The toggle plate may be twisted so as to be parallel with the runners and enable the toggle plate to be passed through a relatively small aperture in the wall. Once the toggle plate has passed through the aperture, the assembly may be twisted so as to encourage the toggle plate to twist out of line with the runners and to extend across the width of the aperture. In order to assist this explanation, the reader is referred to Figure 1 of the accompanying drawings in which such an anchoring device is shown. The device comprises runners 1, toggle plate 2 and clip portion 3. To enable insertion of the toggle plate 2 through an aperture in a thin wall the plate 2 is rotated in the direction shown by arrow Z to bring it into parallel alignment with runners 1. Once the toggle plate 2 is in position behind thin wall and extending across the width of the aperture, clip 3 may be pushed down the runners 1 so that a portion 4 sits within the aperture and forms an inner sleeve and a lip portion 5 is flush with the wall. The runners 1 are provided with teeth with which the clip 3 engages positively so as to allow the clip to be brought towards the wall but not to be pulled away from the wall. The runners 1 are provided in spaced apart relation to one another and an aperture 8 is provided in the clip 3 to allow passage of a bolt or the like through the clip 3 and between the runners and enabling it to screw into a threaded fitting 6 positioned off centre on the toggle plate 2. The unwanted extra portions of the runners 1 which served only to guide the clip 3 in its motion towards the aperture in the wall may be broken off so as to leave a neat anchorage arrangement fixed permanently to the wall.

Whilst the abovementioned device is advantageous, it does require an amount of dexterity in order to ensure that the toggle plate 2 fits properly into the aperture and then falls correctly behind the accessible surface of the wall 1 and to ensure that the threaded fitting 6 can be effectively lined up with the bolt. In order to aid correct deployment of the toggle plate, the threaded fitting 6 must be off-centre on the toggle plate so that the extra weight of shaded portion 9 causes the toggle plate to tend to tip out of alignment with runners 1. The toggle plate 2 therefore requires more material to ensure this tipping action under gravity than would otherwise have been necessary to provide a secure anchorage point and this extra material does not add any more strength to the toggle plate, merely weight.

Furthermore, because of the pivotal relationship between runners 1 and toggle plate 2, holes 7 in the side walls of the plate 2 are required for locating circular protrusions on the end of the runners. These holes 7 need to be in alignment with the threaded fitting 6 and this may tend to weaken the toggle plate 2 in a plane Y-Y passing through these three points.

GB 2,140,890 discloses another type of anchoring device which features a flexible type of bolt attached to a toggle plate. In use, the toggle plate may be brought parallel to a main extent of bolt by bending the bolt end region to enable the toggle plate to pass through an aperture. The flexible nature of the bolt acts to spring the toggle plate back into position once it has been inserted into the aperture. Whilst this arrangement partially overcomes the problems with GB 1,585,973, a special type of flexible bolt fitting is required and the possible applications of the device are more limited. In material costs as well, this particular type of anchoring device is no improvement over the previously described anchoring device and probably more costly.

Accordingly, it would be desirable to produce an anchoring device for blind fixing which has the advantages of the device of GB 1,585,973 but which is adapted to locate itself readily to a mounting surface, does not rely on gravity in order to function correctly and which saves on materials, whilst being versatile and enabling standard fixing bolts to be used.

According to a first aspect of the invention, there is provided an anchoring device for blind fixing to a mounting surface, the device comprising:
an elongate member being provided with a fitting for the acceptance of an external fixture;
at least one guide means connected to the elongate member by a connection portion; and
fixing means co-operable with the guide means, wherein the elongate member is configurable into a closed configuration and an open configuration, in which closed configuration the elongate member is substantially parallel to said guide means to enable the elongate member to be inserted into an aperture in said mounting surface and in which open configuration the elongate member is no longer parallel to said guide means so that the fitting is externally accessible, movement from said closed configuration to said open configuration being effected automatically by resilient biasing means.

By providing the anchoring device with resilient biasing means, the need for an asymmetrical elongate member such as the toggle plate 2 with extra portion 9 shown in Figure 1 is obviated and as the resilient biasing means is not effected by means of a special bolt or the like, standard or common place external fixtures can instead be used in combination with the fitting. In this manner, there is provided an anchoring device which may have less material costs associated with it but which is efficient in operation and does not require specialised parts to mate with it.

The fitting may comprise a first aperture of the elongate member. The first aperture may be threaded for the acceptance of a bolt or like member.

Preferably, the resilient biasing means comprises said connection portion.

Preferably, the connection portion and the guide means are integral with one another.

Preferably, the connection portion comprises a stepped region of said guide means having an attachment portion for connection to said elongate member. The attachment portion may comprise a pair of spaced apart arms having a wedge shaped end region leading to a location portion, the attachment portion being cooperable with a second aperture of said elongate member so that as the attachment portion is brought into contact with the second aperture, the arms tend to be pushed towards one another until the second aperture is substantially in alignment with the location portion, at which point the arms spring back into spaced apart relation to effectively locate the connection portion with the elongate member.

The connection portion is preferably flexible in nature so as to normally encourage the elongate member into the open configuration but to permit the elongate member to be bent into parallel relation with the guide means to bring it into the closed configuration, in such a manner, the flexible nature of the guide means provides the resilient biasing.

Preferably, the guide means comprises a pair of guide runners which are held in spaced part relation to one another by the connection portion. The guide runners may also be joined to one another at an opposite end to that of the connection portion.

Preferably, the guide means is provided with detent means which cooperates with the fixing means so as to enable the fixing means to be moved along the guide means in a direction towards the mounting surface but which inhibit movement of the fixing means in the opposite direction.

Preferably, the fixing means comprises a sleeved washer. The fixing means preferably has a first part which, in use, is adapted to fit inside the aperture of said mounting surface and a second part which is adapted to lie atop the mounting surface.

Preferably, the fixing means is provided with a pair of slots formed therein to enable the fixing means to be associated with the guide means.

Preferably, the guide means and fixing means are formed in such a manner that when associating the two together, the fixing means initially comes into contact with a part of the guide means. The fixing means and guide means are so shaped that as the fixing means is moved, in use, towards the mounting surface, fixing means and guide means interact so as to positively locate with one another and to prevent their disassociation.

Preferably, the elongate member comprises a channel of material of generally U-shaped cross-section.

Preferably, the fitting of the elongate member comprises a threaded hole for the acceptance of a bolt or like member. The hole may be substantially centrally located with respect to the length and width of the elongate member.

Preferably, the second aperture is of a rectangular configuration for cooperation with the connection portion.

By way of example, a specific embodiment of the present invention will now be described with reference to the accompanying drawings, in which:
Figure 2 is a perspective view of a specific embodiment;
Figure 3A is a first, part sectional, view of the guide means 21 and removably attached clip 23 of the anchoring device of Figure 2;
Figure 3B is an end view showing part of the guide means 21 of Figure 3A as seen from arrows C in Figure 3A;
Figure 3C is a further view of the guide means 21 showing the guide means 21 in profile;
Figure 3D shows an end detail of Figure 3C;
Figure 3E is a view on arrow B of the end detail of Figure 3D;
Figure 3F is a view on arrow A of Figure 3C showing the end detail in plan view;
Figure 4A is a side view of the toggle plate 22 of the anchoring device of Figure 2;
Figure 4B is a plan view of the toggle plate 22 as viewed from arrow C of Figure 4A;
Figure 4C is an end view of the toggle plate 22 as seen from arrow D of Figure 4B;
Figure 5A shows the clip 23 of the anchoring device of Figure 2 (when detached from guide means 21) in plan view from above;
Figure 5B shows the clip 23 of Figure 5A in part sectional plan view from below;
Figure 5C is a scrap section on X-X of Figure 5B; and
Figure 5D is an inverted side view of the clip of Figures 5A to 5C.

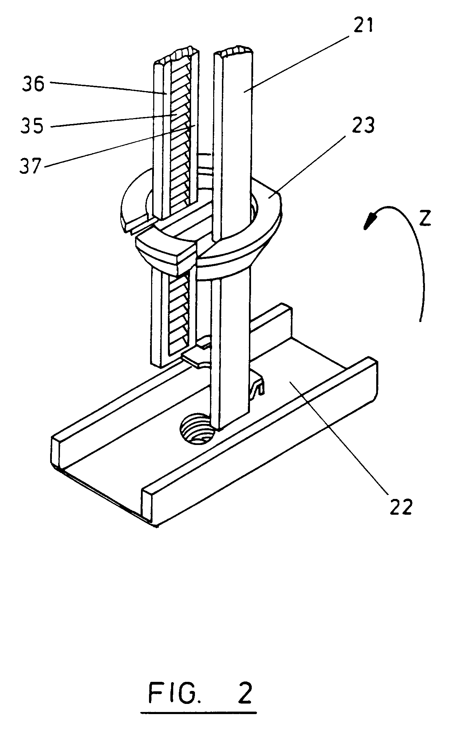

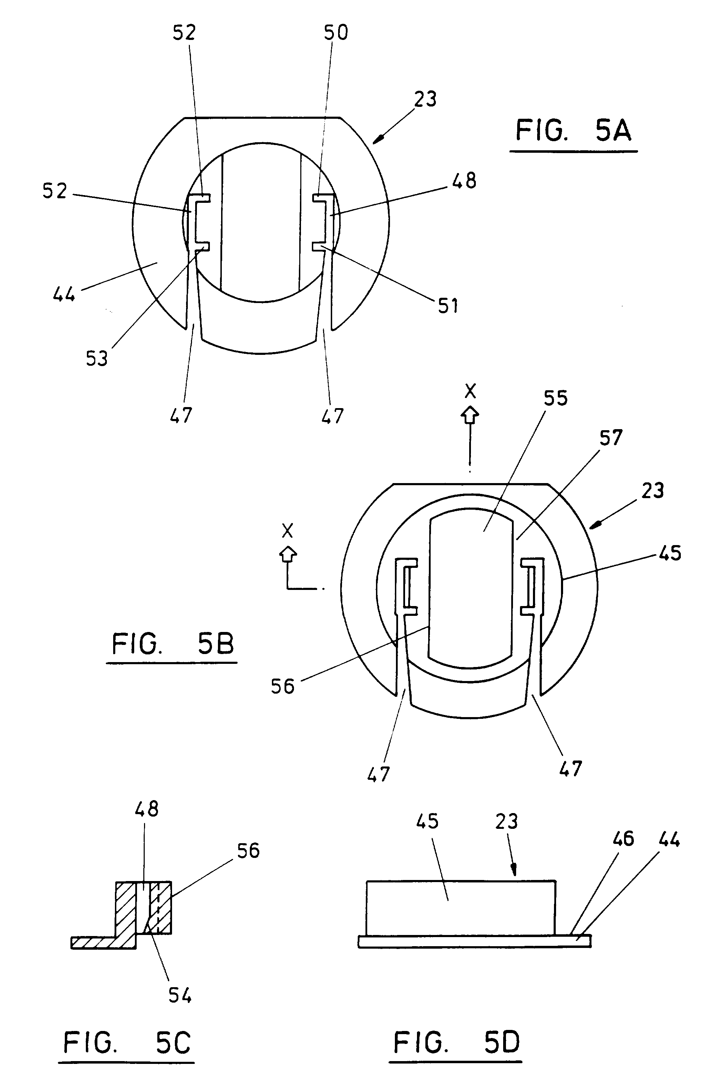

Referring now to Figures 2 to 5D, a specific embodiment of the invention will now be described.

Where elements of the embodiment are similar or analogous to the main elements of the prior art anchoring device shown in Figure 1, those items are referred to using the reference numerals of Figure 1 preceded by a 2. For example, runners 1 of Figure 1 are shown generally as forming part of a guide means 21 of the device of Figure 2.

Referring initially to Figure 2, the anchoring device comprises the guide means 21 complete with fixing means in the form of a clip 23 and an elongate member in the form of a toggle plate 22.

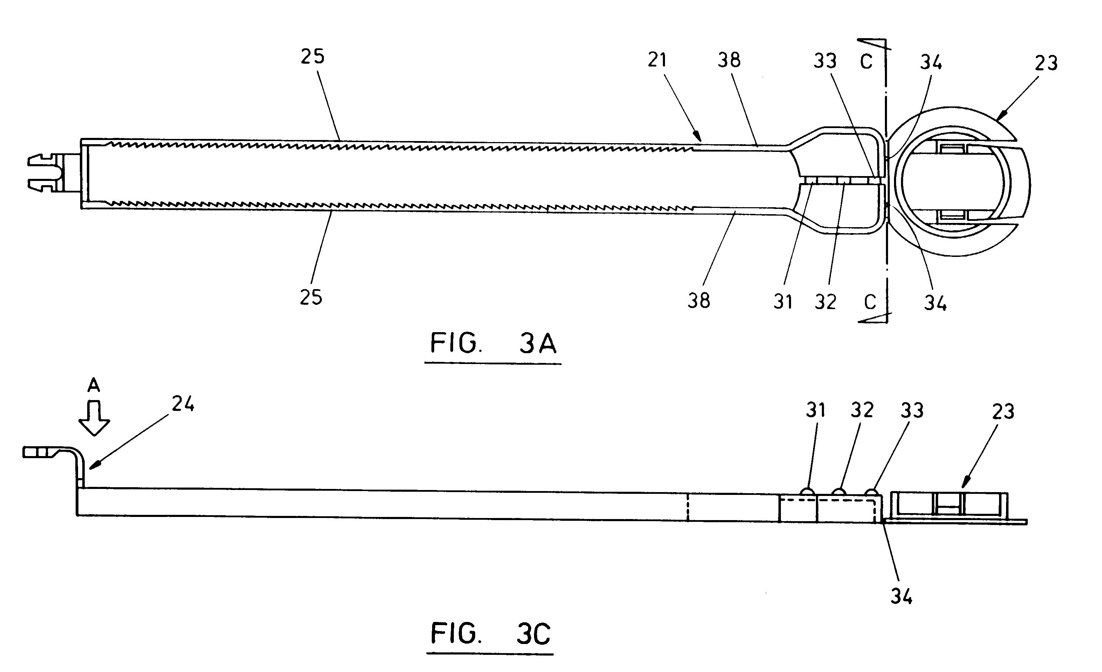

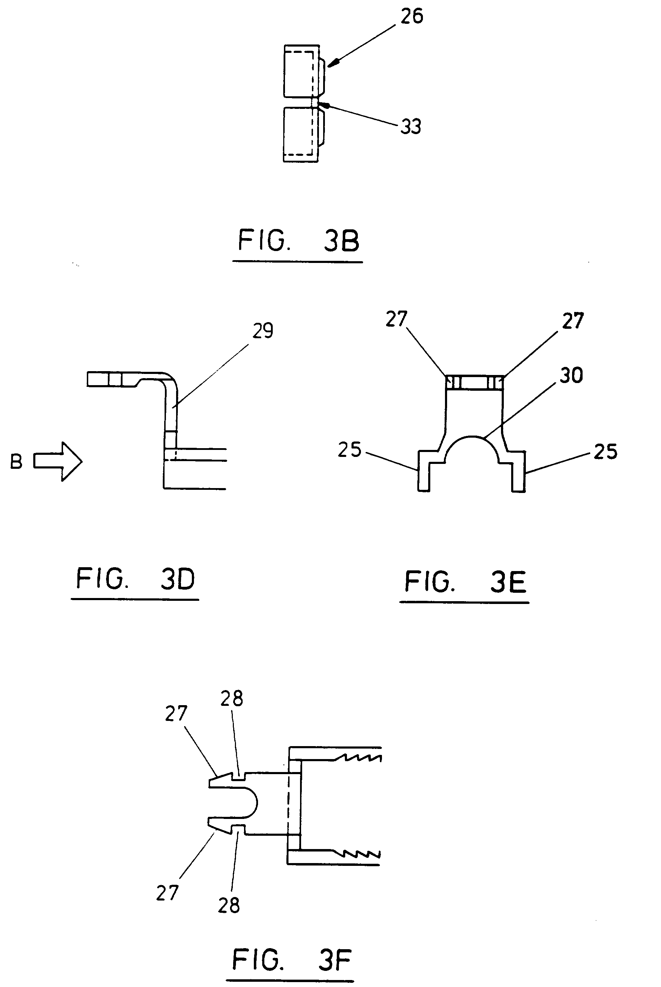

Referring in more detail to Figures 3A to 3F, the guide means 21 of the anchoring device of Figure 2 will now be described. The guide means 21 includes a connection portion 24 which provides resilient biasing means (as will be explained later) connected to a pair of spaced apart parallel toothed legs 25 and a head portion 26, the clip 23 which is a sleeved washer being attached to the head portion 26 by means of breakable means 34. The connection portion 24 and head portion 26 cooperate so as to keep the toothed legs 25 in spaced relation to one another. The connection portion 24 is shown in more detail in Figures 3D to 3F. The connection portion 24 comprises a pair of arms 27 of generally wedge shaped proportions but having indentations 28 formed thereon. The arms 27 are joined to the toothed legs 25 by a stepped region 29 provided generally at right angles to arms 27 and legs 25. The stepped region 29 is provided with a cut away portion 30 which, as will be described later, provides clearance for a bolt or like member to be passed between legs 25.

The head portion 26 of the guide means 21 features a series of breakable links 31 to 33 which enable (after deployment of the anchoring device) the legs 25 to be separated from one another at the head portion 26 to facilitate their cutting or breaking.

Legs 25, as can best be seen from Figure 2, comprise a main extent having an inner toothed region 35 which acts as a detent means with upstanding walls 36, 37 on either side thereof. However, towards the head portion 26, the legs 25 have an untoothed region 38 which does not feature upstanding walls and is of a generally rectangular cross-section. The untoothed region 38 enables the guide means to be associated with the clip 23 as will be described herein after.

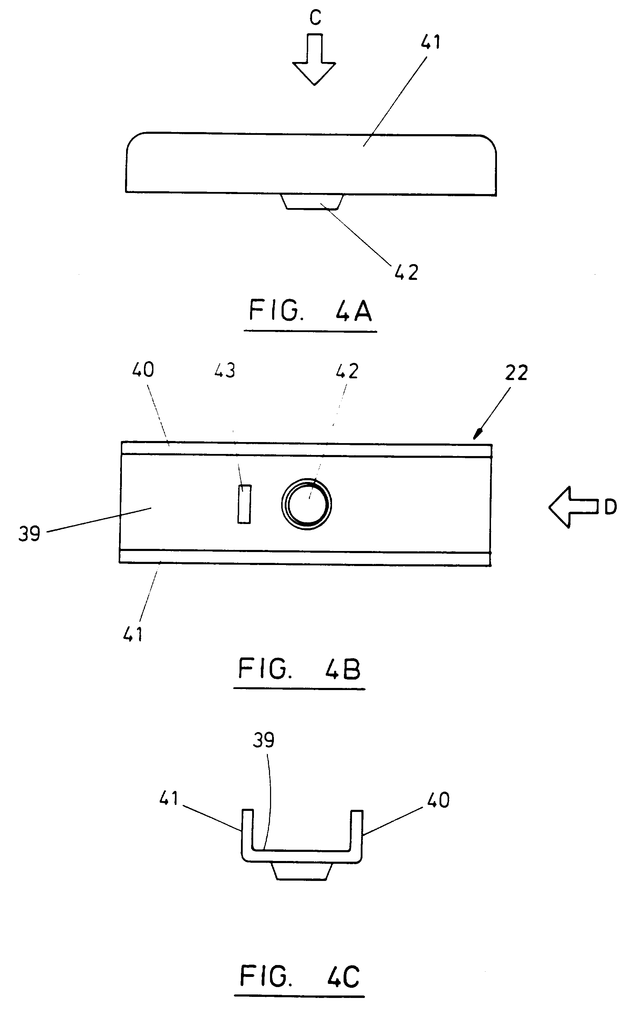

Referring now to Figures 4A to 4C, the elongate member 22 is shown in more detail. The member 22 comprises a channel of generally U-shaped cross-section having a base 39 and upstanding side walls 40, 41. At a region which is substantially central with respect to the length and width of the elongate member, there is provided a fitting 42 in the form of a threaded hole for the acceptance of an external fixture such as a bolt or like member. The fitting is shown as a first aperture 42 in the form of a threaded hole. There is also provided, offset from the first aperture 42 a second, rectangular aperture 43 for cooperation with the connection portion 24 of the guide means 21.

Referring now to Figures 5A to 5D, the clip 23 will now be described in more detail. The clip 23 is a sleeved washer having a wide upper lip 44 and a sleeve portion 45. The sleeve portion 45 is arranged, in use, to fit inside an aperture formed in a mounting surface such as a wall, ceiling or other cavity and the lip 44 is adapted to be flush with the mounting surface such that one surface 46 thereof is in contact with the mounting surface.

The clip is provided with a pair of entry slots 47 formed therein which enable the clip 23 to be guided onto the upper portion 38 of the legs 25 of the guide means 21 to bring them into an inner region 48 of the clip. Thereafter, as the clip is pushed down the legs 25 onto the toothed region, upstanding walls 36, 37 of the legs 25 come into alignment with portions 50 to 53, which provide positive location for the legs 25. The portions 48 have angled regions 54 as shown in Figure 5C and this region cooperates with the toothed region 35 of the legs 25 so as to enable only one way motion of the clip 23 once the wedged portion 54 comes into contact with the first of the steps.

The clip 23 has a central aperture 55 bounded by side walls 56, 57 to allow passage of the bolt or like member therethrough.

Association of the guide means 21, elongate member 22 and clip 23 with one another will now be described.

To assemble the anchoring device, (normally done at place of use) connection portion 24 of the guide means 21 is attached to the toggle plate 22 by pushing arms 27 into the second aperture 43, taking care that the cut away portion 30 of the guide means 31 locates above the threaded hole 42. The connection portion 24 is pushed towards the toggle plate 22 until indentations 28 are aligned with the base 39 of the toggle plate 22 and, when this point is reached, the arms 27 spring out to positively locate the guide means 21 to the toggle plate 22.

The clip 23 may, at this stage, or earlier, be removed from the guide means 21 by breaking links 34 and be associated with the guide means 21 by slipping the untoothed regions 38 of the guide means 21 into slots 47 of the clip 23 and then pushing the clip 23 down until the angled region 54 locates with the first of the steps and prevents subsequent removal of the clip.

Of course, it will be appreciated that the clip 23 may either be associated with the guide means 21 at a factory location or, more likely, may be associated with the guide means 21 by a user when it is desired to deploy the device.

Use of the anchoring device will now be described.

When it is desired to attach an object to a mounting surface, for instance, to hang a picture on a wall, a guide hole is initially drilled into the wall at the desired location. Then, a hole is drilled out to dimensions which would permit the sleeve portion 45 of the clip 23 to fit snugly therein. Once that hole has been drilled, the device may be deployed by first breaking free clip 23 from guide means 21 by breaking links 34, then inserting guide means 21, as previously described, into second aperture 43 of toggle plate 22. Rotate the toggle plate 22 in the direction shown by arrow Z in Figure 2 so as to bring the toggle plate 22 substantially into parallel alignment with the guide means 21. During the bending motion, the area joining stepped portion 29 and legs 25 effectively acts as a pivoting point to enable parallel alignment of the guide means 21 and toggle plate 22.

Next, the toggle plate 22 and end portion of the guide means 21 which are in a closed configuration, are pushed through the aperture in the thin wall. Once the whole of the toggle plate 22 is inside the thin wall, the toggle plate will spring back into an open configuration such that it is substantially at right angles again to the main extent of the guide means 21. At this point, the clip 23 which has been associated with the guide means 21 may be pushed down the guide means so as to enable the sleeve portion to move snugly inside the hole in the wall, with the lip 44 resting outside of the wall. At this point, due to the one way action of the clip 23 and guide means 21, the clip 23 can no longer be moved back away from the wall and so the main extent of the guide means 21 can then be cut away or broken off. Cutting away may be facilitated by separating the legs 25 at the head portion 26 by breaking the breakable links 31 to 33 so as to allow the legs 25 to separate. With the legs separated they are easily broken or cut off.

Finally, with the anchoring device neatly in place on the wall, a threaded bolt or similar device may be easily located with the threaded hole 42 and, if desired, further washers etc may be used to provide a solid connection between bolt, fastened object, wall and toggle plate 22.

It will readily be apparent from the above discussion that the anchoring device provides a neat, simple and effective way in which to attach fixtures to thin walls or other mounting surfaces. It will also be appreciated that numerous variations utilising the inventive principle may be made by a man skilled in the art.

The anchoring device of the present invention overcomes or reduces the problems of the prior art anchoring devices by associating guide means 21 and toggle plate 22 with one another by way of resilient biasing means, and this association does not require the use of special bolts, other fixings or gravity.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An anchoring device for blind fixing to a mounting surface, the device comprising:
an elongate member being provided with a fitting for the acceptance of an external fixture;
at least one guide means connected to the elongate member by a connection portion; and
fixing means cooperable with the guide means, wherein the elongate member is configurable into a closed configuration and an open configuration, in which closed configuration the elongate member is substantially parallel to said guide means to enable the elongate member to be inserted into an aperture in said mounting surface and in which open configuration the elongate member is no longer parallel to said guide means so that the fitting is externally accessible, movement from said closed configuration to said open configuration being effected automatically by resilient biasing means.

2. An anchoring device according to claim 1, wherein the fitting comprises a first aperture of the elongate member.

3. An anchoring device according to claim 2, wherein the first aperture is threaded for the acceptance of a bolt or like member.

4. An anchoring device according to any of the preceding claims, wherein the resilient biasing means comprises said connection portion.

5. An anchoring device according to claim 4, wherein the connection portion and the guide means are integral.

6. An anchoring device according to claim 4 or 5, wherein the connection portion comprises a stepped region of said guide means having an attachment portion for connection to said elongate member.

7. An anchoring device according to claim 6, wherein the attachment portion comprises a pair of spaced apart arms having a wedge shaped end region leading to a location portion, the attachment portion being cooperable with a second aperture of said elongate member so that as the attachment portion is brought into contact with the second aperture, the arms tend to be pushed towards one another until the second aperture is substantially in alignment with the location portion, at which point the arms spring back into spaced apart relation to effectively locate the connection portion with the elongate member.

8. An anchoring device according to any of claims 4 to 7, wherein the connection portion is flexible in nature so as to normally encourage the elongate member into the open configuration but to permit the elongate member to be bent into parallel relation with the guide means to bring it into the closed configuration, in such a manner, the flexible nature of the guide means provides the resilient biasing.

9. An anchoring device according to any of the preceding claims, wherein the guide means comprises a pair of guide runners which are held in spaced apart relation to one another by the connection portion.

10. An anchoring device according to claim 9, wherein the guide runners are joined to one another at an opposite end to that of the connection portion.

11. An anchoring device according to any of the preceding claims wherein the guide means is provided with detent means which cooperates with the fixing means so as to enable the fixing means to be moved along the guide means in a direction towards the mounting surface, but which inhibits movement of the fixing means in the opposite direction.

12. An anchoring device according to any of the preceding claims wherein the fixing means comprises a sleeved washer.

13. An anchoring device according to claim 12 wherein the fixing means has a first part which, in use, is adapted to fit inside the aperture of said mounting surface and a second part which is adapted to lie atop the mounting surface.

14. An anchoring device according to any of claims 11 to 13, wherein the fixing means is provided with a pair of slots formed therein to enable the fixing means to be associated with the guide means.

15. An anchoring device according to any of claims 11 to 14, wherein the guide means and fixing means are formed in such a manner that during their association as the fixing means is moved, in use, towards the mounting surface, fixing means and guide means interact to positively locate with one another and to prevent their disassociation.

16. An anchoring device according to any of the preceding claims, wherein the elongate member comprises a channel of material of generally U-shaped cross-section.

17. An anchoring device according to any of the preceding claims wherein the fitting of the elongate member comprises a threaded hole for the acceptance of a bolt or like member.

18. An anchoring device according to claim 17 wherein the whole is substantially centrally located with respect to the length and width of the elongate member.

19. An anchoring device according to any of the preceding claims wherein the second aperture is of a rectangular configuration for cooperation with the connection portion.
